# EUROPEAN PATENT SPECIFICATION

(11) **EP 2 168 922 B1**
(45) Date of publication and mention of the grant of the patent: **24.10.2012**
(21) Application number: 08016792.7
(22) Date of filing: 24.09.2008
(51) Int. Cl.: C02F 9/00, B01D 21/00, C02F 1/52, C02F 1/00

(54) **Sewage treatment system**
Abwasserbehandlungssystem
Système de traitement des eaux usées

(43) Date of publication of application: 31.03.2010
(73) Proprietor: King Abdulaziz City for Science and Technology, Riyadh 114422 (SA)
(72) Inventor: Baabbad, Mazen, Abdullah, Dr., 11442 Riyadh (SA)
(74) Representative: Appelt, Christian W.

(56) References cited:
- FR-A- 2 891 540

## Description

The present invention relates to a sewage treatment system and, in particular, to a three-stage sewage treatment system.

Extracting fresh water from sewage water is a promising approach to overcoming water shortages especially in densely populated areas. To this end, the sewage water must be treated and filtered before it can be reused for most purposes. The conventional way sewage water treatment is effected is to use large settling tanks, clarifiers, and aeration units. Since the average value for the total suspended solids in municipal sewage water is around 0.2%, most of the processed volume is made up of water, thus requiring large tanks and long settling times. Accordingly, systems and methods known in the art consume a large amount of space and time and suffer from a low integration level. From FR 2 891 540 a water treatment device is known which may be used to effect a method comprising a rapid settling step followed by a filtration step.

Accordingly, a problem to be solved by the present invention is to provide a system avoiding these downsides described above and, in particular, providing an improved integration level.

The sewage treatment system according to the present invention comprises a settling tank having first, second, and third ports, which settling tank is configured to receive raw sewage at its first port, provide pre-cleaned water at its second port, and provide an egress for solids removed from said sewage at its third port. A system according to the present invention further comprises a first filter-unit connected to the second port of the settling tank to receive and filter said pre-cleaned water, said first filter unit being further connected to the first port of the settling tank to return solids and floating material removed from said pre-cleaned water in the first filter unit to the settling tank. A sewage treatment system according to the present invention also comprises a second filter unit connected to the first filter unit, being configured to receive and further filter filtered water from the first filter unit, wherein said second filter unit is connected to the first port of the settling tank to return solids and floating material removed from the water in the second unit to the settling tank. The first filter unit further comprises a rotor stem, rotor blades, filtering rings, rotor bottom holes, and water slush shields, wherein the first filter unit comprises three successive sections to each of which a rotor blade and a filtering ring is attributed, wherein the rotor stem of said first filter unit is connected to the second port of the settling tank to receive water from the second port, wherein said rotor stem comprises bottom holes to release water from the rotor stem into the lower section through said bottom holes, and wherein the water slush shields are arranged to prevent water from moving upwards in the first filter unit other than through the filtering rings.

According to a preferred embodiment of the present invention the settling tank is of a star-shaped form with the first, second and third ports forming three ends thereof. In a particularly preferred embodiment, the settling tank has a Y-form with the first, second and third ports forming the three ends thereof. Preferably, the third port is arranged at the bottom of the settling tank to allow solids to settle at or near the bottom. Similarly, the first and/or second ports are arranged at or near the top of the settling tank to provide for a maximum settling time in the tank, while providing continuous rather than batch processing.

In another preferred embodiment the settling tank comprises a screw at or near the third port for removing solids and a channel for trapping solids and guiding them towards the screw. Thereby, a simple but effective means for removal of settled solids at the bottom of the settling tank is provided.

In another preferred embodiment the settling tank is provided with a separator at or near the first port defining an area inside the settling tank in which material lighter than water aggregates. This aggregation area near the first port is preferably open to the environment so that material lighter than water can easily be removed from the settling tank.

In another preferred embodiment the settling tank comprises a sedimentation section at or near the second port. Preferably, at or near that second port, said settling tank further comprises a floating material trap. Likewise, at or near said second port, the settling tank may comprise an escape opening and/or a collection section.

Preferably, said first filter unit further comprises solids accumulation grooves and solids removal screws and a filtered water exit ring.

In another preferred embodiment the solids accumulation grooves are arranged and configured to collect solids from the water, wherein said grooves are cleaned with the aid of suitably arranged solids removal screws. Said filtered water exit ring is preferably configured and arranged to allow filtered water to exit the first filter unit therethrough.

In yet another preferred embodiment the second filter unit comprises a rotor stem, a water distribution disk, filtering compartments, filtered water outlets, a solids accumulation ring and/or a solids rejection outlet.

In another preferred embodiment the second filter unit comprises first, second and third filtering compartments. Preferably, the rotor stem of the second filter unit is connected to the first filter unit to receive filtered water from the first filter unit. Preferably, said rotor stem is configured to allow said received water to be released into the water distribution disk.

In another preferred embodiment, the water distribution disk is configured to guide said water to the first filtering compartment comprising triangular vortex-generating elements, at least one first filtering sheet, passages and/or an outlet for solids. In a preferred embodiment said first filtering compartment is configured to allow water entering the first filtering compartment to first pass at least a first of said vortex generation elements and subsequently pass through said at least one first filtering sheet. Preferably, solids which do not pass through said first filtering shield, are rejected by the outlet for solids.

In a preferred embodiment, said second filter unit is configured to guide said water, subsequent to passing through the first filtering compartment, to a second filtering compartment comprising at least one second filtering sheet and an outlet for solids.

In another preferred embodiment said second filter unit is configured to guide said water, subsequent to passing through the second filtering sheet of the second filtering compartment, to a third filtering compartment comprising a cylindrical filter, a filtered water outlet, and/or an outlet for solids. Said third filtering compartment filters water and passes it to the filtered water outlet, while solids are rejected through the outlets for solids.

In another preferred embodiment, said second filter unit is configured to collect solids rejected from the first, second and third compartments, preferably in said solids accumulation ring, and transfer those solids from the second filter unit to the first port of the settling tank.

Thus, according to the system of the present invention filtered water is obtained from the outlet of the second filter, whereas grease and floating debris can be removed from the area near the first port of the settling tank while suspended solids and sludge can be removed from the third port of the settling tank. The system according to the present invention provides for continuous processing rather than batch processing requiring less space than conventional systems and thus yielding a high level of integration and modularity.

The present invention also relates to a method of treating sewage water wherein water is pre-cleaned in a settling tank, passed on to a first filter unit and finally to a second filter unit referred to above.

Further details and advantages of the present invention will be described below in conjunction with the appended figures, wherein
Fig. 1 shows an embodiment of the settling tank according to the present invention;
Fig. 2 shows the settling tank of Fig. 1 in more detail;
Fig. 3 shows a first filter unit according to the present invention;
Fig. 4 shows a top view of said first filter unit shown in Fig. 3;
Fig. 5 shows a bottom view of the first filter unit shown in Fig. 3;
Fig. 6 shows a second filter unit according to the present invention;
Fig. 7 and 8 show further details of the second filter unit; and
Fig. 9 shows a first filtering compartment of the second filter unit according to the present invention.

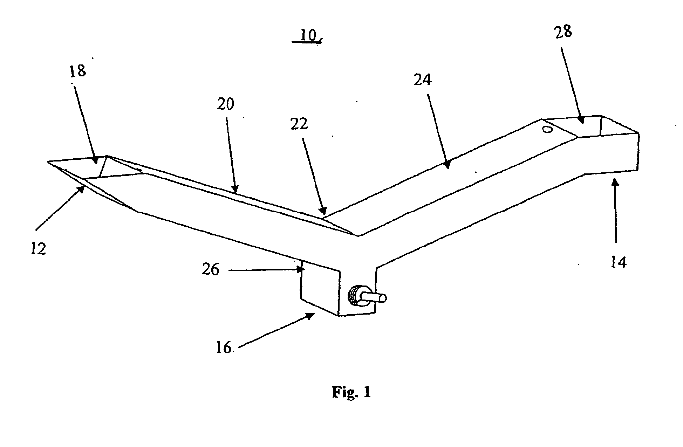

As shown in Fig. 1, the three-ended, Y-shaped settling tank 10 according to the present invention comprises a first port 12 and a second port 14 on either side as well as a third port 16 at its bottom. Raw sewage is fed into the settling tank through an opening 18 of the first port 12. From the first port 12 water runs down a first branch 20 towards junction 22, i.e. first branch 20 extends from junction 22 in an upwardly direction towards the first port 12. In case a sufficient amount of sewage is supplied to fill the settling tank, the first branch 20 as well as the second branch 24 extending from junction 22 in an upwardly direction towards the second port 14 and the third branch 26 extending from junction 22 in a downwardly direction towards the third port 16 fill up with sewage water. In the embodiment shown in Fig. 1, second port 14 is at substantially the same height (i.e., potential energy) as the first port 12. Accordingly, the second reservoir 28 formed at the second port 14 is filled with water.

Due to the star-shaped form of the settling tank 10, material which is lighter than water will tend to remain afloat near the first port 12, i.e., near the highest point of branch 20. On the other hand, solids and other material having a density larger than the one of water will sink by the action of gravity to the bottom floor of either the first branch 20 or the second branch 24. Due to the inclined floor surface of those branches 20, 24, such solids and material are guided towards junction 22 and from there to the third branch 26. Thus, solids and material heavier than water tend to accumulate at or near the third port 16. Pre-cleaned water can then be collected from the second reservoir 28 at the second port 14.

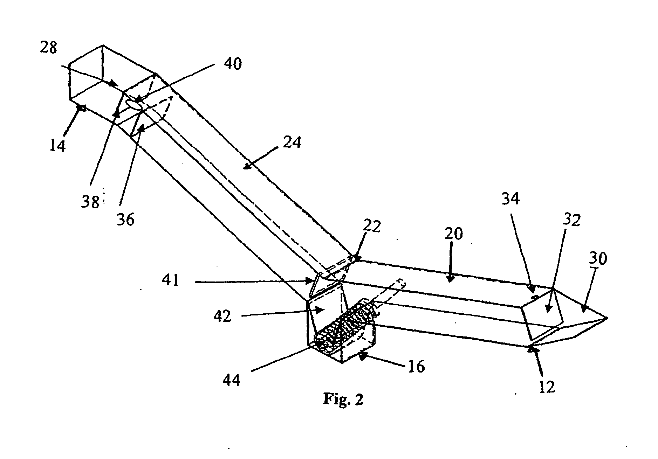

Fig. 2 shows the settling tank 10 according to Fig. 1 in some more detail. First port 12 has a first reservoir 30 to receive sewage water. A separator plate 32 arranged inside branch 20 extends from the top surface of the first branch 20 towards the bottom surface thereof near the first port 12, thus covering almost the entire internal cross-section of the first branch 20 to trap material lighter than water (e.g. grease and floating debris) in said first reservoir 30, i.e. at the first port 12. Further, a floating escape opening 34 is provided near the first port 12 to allow for the removal of any floating material which has nevertheless passed said plate 32.

Turning to the second port 14, a second plate 36 is provided inside branch 24 extending form the bottom surface of the second branch 24 towards the top surface thereof to block any sediments/settled solids from reaching the second reservoir 28 at the second port 14.
Nearer the second reservoir 28 there is also provided a third plate 38 extending form the top surface of the second branch 24 towards the bottom surface thereof to act as a floating material trap. In between the second plate 36 and the third plate 38 a second opening 40 is provided through which said floating material trapped by the third plate 38 can be removed from the second branch 24.

Inside the second branch 24 near junction 22 there is further provided a blocker plate 41 to stop any lighter than water material from flowing towards the second port 12.

Turning to the third port 16, there is provided a channel 42 which extends into the third branch 26 from junction 22 towards the third port 16 and becomes narrower towards the third port 16. Near the narrow end of channel 42, there is provided a screw 44 with the aid of which solids accumulating near the bottom of channel 42 can be removed.

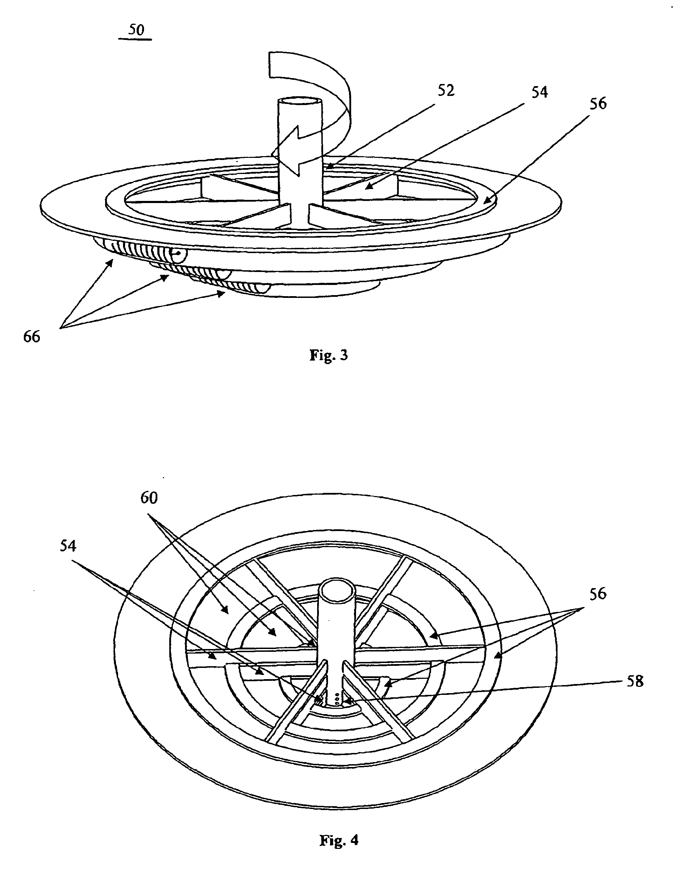

The first filter unit 50 is shown in figures 3 to 5. First filter unit 50 comprises a rotor stem 52 forming a central axis around which three rotor blades 54 and three filtering rings 56 are arranged. As can be taken from figure 4, the first filter unit 50 comprises three stages, a lower stage, a middle stage and a top stage, each of which being arranged concentrically and with increasing diameter around rotor stem 52 and having attributed thereto one of said rotor blades 54 and one of said filtering rings 56.

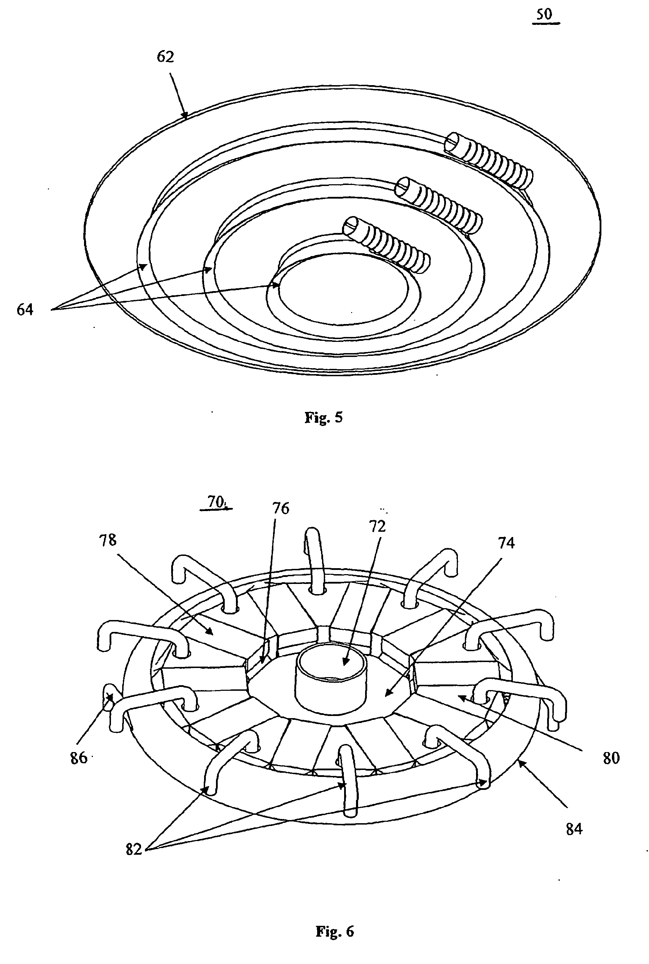

Water from the settling tank 10 is pumped into rotor stem 52 having bottom holes 58. Through bottom holes 58, pre-cleaned water enters the first, lowest stage comprising the lowest rotor blade 54 and filtering ring 56. In between the stages, water slush shields 60 are arranged so as to prevent water in a lower stage being rotated through the action of a respective rotor blade 54 to splash over and upwards into the next higher stage. Water from a first stage can thus only reach the next stage by passing through the corresponding filtering ring 56. The rotor blades 54 which provide rotational motion to the water, at the same time clean the upper and lower sides of the filtering rings 56 by scrubbing and through turbulence. Eventually, filtered water is allowed to exit the first filter unit 50 through the water exit ring 62 shown in Fig. 5.

In the first filter unit 50, solids are allowed to settle in the solids accumulation grooves 64. Each of said grooves 64 is provided with a solids removal screw 66, whereby solids can be removed from said grooves 64, e.g. on a periodical basis, and transferred back to the first port 12 of the settling tank 10. Floating material is periodically removed from the rotor stem 52 and equally transferred back to the first port 12 of the settling tank 10.

The filters 56 of the first filter unit are relatively coarse filters of gradually decreasing mesh sizes. Further the rotational speed of the rotor is relatively slow, e.g. less than 30 rpm. The overall dimensions of this unit 50 are typically around 1 meter in diameter and 70 cm in height.

An overview of the second filter unit 70 is given in Fig. 6. Second filter unit 70 comprises a rotor stem 72 and a water distribution disc 74 arranged concentrically around said stem 72. Surrounding the water distribution disc, first filtering compartments 76, second filtering compartments 78, and third filtering compartments 80 are arranged.

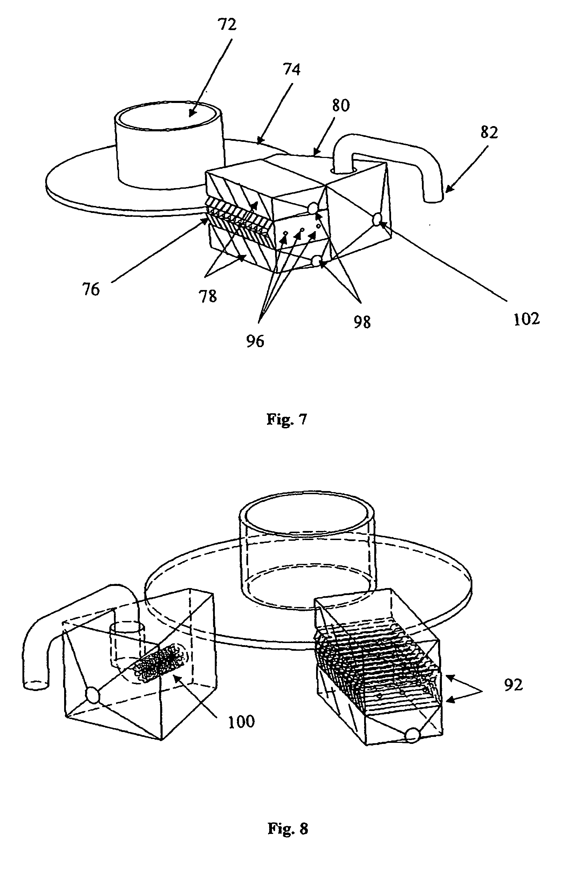

Filtered water leaving the first filter unit 50 via water exit ring 62 is pumped into the rotor stem 72 and from there released to the water distribution disc 74 of the second filter unit 70. The water then passes through the first filtering compartment 76, followed by the second filtering compartment 78, and finally through the third filtering compartment 80, which will be described below in conjunction with figures 7 to 9. Filtered water having passed through the three filtering compartments eventually exits the second filter unit via egresses 82. Solids removed from said water, as will be described below, are passed to the solids accumulating ring 84 from which said solids can be rejected via outlets 86 and transferred to the first part of the settling tank 10.

Next, the filtering in the second filter unit 70 will be described in more detail. Fig. 7 shows first filtering compartment 76 sandwiched in between two sections of the second filtering compartment 78, both of which compartments 76, 78 lie to one side of the third filtering compartment 80.

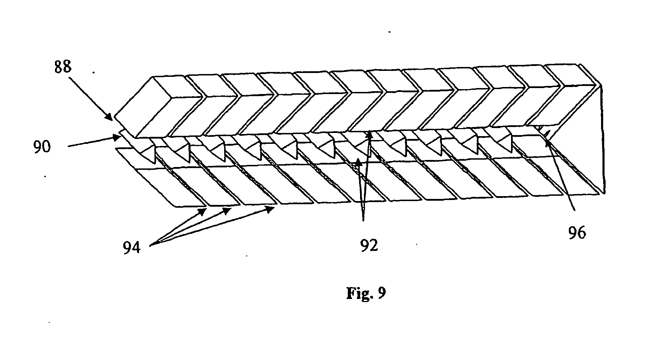

Water entering the first filtering compartment 76 through ingress 88 (shown in Fig. 9) pressed against the triangular vortex-generating elements 90, which are arranged in a staggered fashion and with on of their tips pointing against the direction of water flow. At the same time, said vortex-generating elements 90 are arranged in between two filtering sheets 92 through which said water subsequently passes. After that the filtered water is passed to the second filtering compartment 78 through the passages 94. Solids which did not pass the filtering sheets 92, however, are rejected to the solids accumulating ring 84 via the exits 96.

The second filtering compartment 78 comprises two filtering sheets at the sides opposing third filtering compartments 80. Filtered water that passes from the filtering sheets of the second compartment 78 passes to the third filtering compartment 80, while the solids are passed via outlets 98 to the solids accumulating ring 84.

Finally, the third filtering compartment 80 comprises a cylindrical filter 100 through which water passes and from where said filtered water exits via outlets 82. Solids are again rejected to the solids accumulating ring 84 via openings 102.

The filters in the second filter unit 70 are arranged to be of gradually decreasing mesh sizes and the rotational speed of the rotor is slow, e.g. less than 200 rpm. Typically, the overall dimensions of the second filter unit 70 are around 1m in diameter and 70 cm in height.

The overall dimensions of this system, even though dependent on the required water quantity and quality, are typically about 10 meters in length, 3 meters in depth and 2 meters in width.

Thus, the system according to the present invention provides for a highly integrated and space saving system for the treatment of sewage, while making continuous processing possible.

## Claims

1. Sewage treatment system comprising
a settling tank (10) having first, second, and third ports (12, 14, 16), which settling tank (10) is configured to receive raw sewage at its first port (12), provide pre-cleaned water at its second port (14), and provide an egress for solids removed from said sewage at its third port (16);
a first filter unit (50) connected to the second port (14) of the settling tank (10) to receive and filter said pre-cleaned water, said first filter unit (50) being further connected to the first port (12) of the settling tank to return solids and floating material removed from said pre-cleaned water in the first filter unit (50) to the settling tank (10); and
**characterised by**
a second filter unit (70) connected to the first filter unit (50) to receive and further filter filtered water from the first filter unit (50), said second filter unit (70) being further connected to the first port (12) of the settling tank (10) to return solids and floating material removed from the water in the second filter unit (70) to the settling tank (10), wherein
the first filter unit (50) comprises a rotor stem (52), rotor blades (54), filtering rings (56), rotor bottom holes (58), and water slush shields (60),
wherein the first filter unit (50) comprises three successive sections to each of which a rotor blade (54) and a filtering ring (56) is attributed,
wherein the rotor stem (52) of said first filter unit is connected to the second port (14) of the settling tank to receive water from the second port (14),
wherein said rotor stem (52) comprises bottom holes (58) to release water from the rotor stem (52) into the lower section through said bottom holes, and
wherein the water slush shields (60) are arranged to prevent water from moving upwards in the first filter unit (50) other than through the filtering rings (56).

2. Sewage treatment system according to claim 1, wherein
the settling tank (10) is of a star-shaped form with the first, second, and third ports (12, 14, 16) forming three ends thereof and the third port (16) being arranged at the bottom of the settling tank (10),

3. Sewage treatment system according to any one of the preceding claims, wherein near the third port (16) of the settling tank (10), a screw (44) for removing solids and a channel (42) for trapping solids and guiding them towards the screw (44) are provided.

4. Sewage treatment system according to any one of the preceding claims, wherein near the first port (12) of the settling tank, the settling tank (10) is provided with a separator (32) defining a first reservoir (30) inside the settling tank in which material lighter then water aggregates.

5. Sewage treatment system according to any one of the preceding claims, wherein near the second port (14), the settling tank (10) comprises a sedimentation blocker (36), a floating material trap (38), an escape opening (40), and / or a second reservoir (28).

6. Sewage treatment system according claim 1, wherein said first filter unit (50) further comprises solids removal screws (66), solids accumulation grooves (64), and a filtered water exit ring (62).

7. Sewage treatment system according to claim 6,
wherein said solids accumulation grooves (64) are configured to collect solids from the water and wherein said solids accumulation grooves (64) are cleaned with the aid of suitably arranged solids removal screws (66), and / or
wherein the filtered water exit ring (62) is configured to allow filtered water to exit the first filter unit (50) there through.

8. Sewage treatment system according to any one of the preceding claims, wherein the second filter unit (70) comprises a rotor stem (72), a water distribution disc (74), filtering compartments (76, 78, 80), filtered water outlets (82), a solids accumulation ring (84) and / or a solids rejection outlet (86).

9. Sewage treatment system according to any one of the preceding claims, wherein the second filter unit (70) comprises first, second, and third filtering compartments (76, 78, 80),
wherein the rotor stem (72) of the second filter unit (78) is connected to the first filter unit (76) to receive filtered water from the first filter unit (76), and / or
wherein said rotor stem (72) is configured to allow said received water to be released into the water distribution disc (74).

10. Sewage treatment system according to any one of the preceding claims, wherein
the water distribution disc (74) is configured to guide said water to a first filtering compartment (76) comprising triangular vortex-generating elements (90), at least one first filtering sheet (92), passages (94), and/or an outlet for solids (96).

11. Sewage treatment system according to any one of the preceding claims, wherein
said first filtering compartment (76) is configured to allow water entering the first filtering compartment (76) to first pass at least a first of said vortex generating elements (90) and subsequently pass through said at least one first filtering sheet (92) and wherein solids not passing though said first filtering sheet are rejected by the outlet for solids (96).

12. Sewage treatment system according to any one of the preceding claims, wherein
said second filter unit (70) is configured to guide said water, subsequent to passing through the first filtering compartment (76), to a second filtering compartment (78) comprising at least one second filtering sheet and an outlet for solids (98).

13. Sewage treatment system according to any one of the preceding claims, wherein
said second filter unit (70) is configured to guide said water, subsequent to passing through the second filtering sheet of the second filtering compartment (78), to a third filtering compartment (80) comprising a cylindrical filter (100), a filtered water outlet (82), and an outlet for solids (102) which third filtering compartment (80) filters water and passes it to the filtered water outlet (82) while solids are rejected through the outlet for solids (102).

14. Sewage treatment system according to any one of the preceding claims, wherein
said second filter unit (70) is configured to collect solids rejected from the first, second, and third compartments (76, 78, 80) in said solids accumulation ring (84) and transfer those solids from said solids accumulation ring (84) to the first port (12) of the settling tank (10).

## Patentansprüche

1. Abwasserbehandlungssystem mit:
einem Ablagerungstank (10) mit einem ersten, zweiten und dritten Anschluss (12, 14, 16), wobei der Ablagerungstank (10) ausgebildet ist, um unverarbeitetes Abwasser an seinem ersten Anschluss (12) zu empfangen, vorgereinigtes Wasser an seinem zweiten Anschluss (14) bereitzustellen und um einen Auslass für feste Bestandteile, die von dem Abwasser entfernt wurden, an seinem dritten Anschluss (16) bereitzustellen;
einer ersten Filtereinheit (50), die mit dem zweiten Anschluss (14) des Ablagerungstanks (10) verbunden ist, um das vorgereinigte Wasser zu empfangen und zu filtern, wobei die erste Filtereinheit (50) weiter mit dem ersten Anschluss (12) des Ablagerungstanks verbunden ist, um feste und schwimmende Bestandteile, die von dem vorgereinigten Wasser in der ersten Filtereinheit (50) entfernt wurden, an den Ablagerungstank (10) zurückzugeben;
**dadurch gekennzeichnet, dass**
eine zweite Filtereinheit (70), die mit der ersten Filtereinheit (50) verbunden ist, um gefiltertes Wasser von der ersten Filtereinheit (50) zu empfangen und weiter zu filtern, wobei die zweite Filtereinheit (70) außerdem mit dem ersten Anschluss (12) des Ablagerungstanks (10) verbunden ist, um feste und schwimmende Bestandteile, die von dem Wasser in der zweiten Filtereinheit (70) entfernt wurden, an den Ablagerungstank (10) zurückzuführen, wobei
die erste Filtereinheit (50) einen Rotorschaft (52), Rotorblätter (54), Filterringe (56), untere Rotoröffnungen (58) und Wasserschlammschilde (60) umfasst,
wobei die erste Filtereinheit (50) drei aufeinander folgende Abschnitte aufweist, zu denen je ein Rotorblatt (54) und ein Filterring (56) zugeordnet ist,
wobei der Rotorschaft (52) der ersten Filtereinheit mit dem zweiten Anschluss (14) des Ablagerungstankes verbunden ist, um Wasser von dem zweiten Anschluss (14) zu empfangen,
wobei der Rotorschaft (52) untere Öffnungen (58) aufweist, um Wasser von dem Rotorschaft (52) in den unteren Abschnitt über die unteren Öffnungen auszugeben, und wobei die Wasserschlammschilde (60) so angeordnet sind, um zu verhindern, dass Wasser sich auf eine andere Weise als über die Filterringe (56) nach oben in die erste Filtereinheit (50) bewegt.

2. Abwasserbehandlungssystem nach Anspruch 1, wobei
der Ablagerungstank (10) eine sternförmige Form aufweist, wobei der erste, zweite und dritte Anschluss (12, 14, 16), drei Enden davon bilden und der dritte Anschluss (16) an einem unteren Abschnitt des Ablagerungstanks 10 angeordnet ist.

3. Abwasserbehandlungssystem nach einem der vorhergehenden Ansprüche, wobei in der Nähe des dritten Anschlusses (16) des Ablagerungstanks (10) eine Schraube (44) ausgebildet ist, um feste Bestandteile zu entfernen, und ein Kanal (42) ausgebildet ist, um feste Bestandteile zu erfassen und hin zu der Schraube (44) zu bewegen.

4. Abwasserbehandlungssystem nach einem der vorhergehenden Ansprüche, wobei in der Nähe des ersten Anschlusses (12) des Ablagerungstanks der Ablagerungstank (10) ein Trennelement (32) aufweist, welches ein erstes Reservoir (30) innerhalb des Ablagerungstanks definiert, in welchem Material, welches leichter als Wasser ist, sich ansammelt.

5. Abwasserbehandlungssystem nach einem der vorhergehenden Ansprüche, wobei in der Nähe des zweiten Anschlusses (14) der Ablagerungstank (10) einen Ablagerungsblockierer (36), einen Abscheider für schwimmende Bestandteile (38), eine Auslass-öffnung (40) und/oder ein zweites Reservoir (28) aufweist.

6. Abwasserbehandlungssystem nach Anspruch 1, wobei
die erste Filtereinheit (50) weiter eine Ablassschraube für feste Bestandteile (66), Ansammlungsvertiefungen für feste Bestandteile (64) und einen Auslassring für gefiltertes Wasser (62) umfasst.

7. Abwasserbehandlungssystem nach Anspruch 6,
wobei die Ansammlungsvertiefungen (64) für feste Bestandteile ausgebildet sind, um feste Bestandteile von dem Wasser zu sammeln, und wobei die Ansammlungsvertiefungen (64) für feste Bestandteile mittels geeignet angeordnete Ablassschrauben (66) für feste Bestandteile gereinigt werden, und/oder
wobei der Auslassring (62) für gefiltertes Wasser ausgebildet ist, um darüber das Auslassen des gefilterten Wassers aus der ersten Filtereinheit (50) zu ermöglichen.

8. Abwasserbehandlungssystem nach einem der vorhergehenden Ansprüche, wobei die zweite Filtereinheit (70) einen Rotorschaft (72), eine Wasserverteilungsscheibe (64), Filterabteilungen (76, 78, 80), Auslässe (82) für gefiltertes Wasser, einen Ansammlungsring (84) für feste Bestandteile und/oder einen Auslass (86), der feste Bestandteile aussondert, umfasst.

9. Abwasserbehandlungssystem nach einem der vorhergehenden Ansprüche, wobei die zweite Filtereinheit (70) erste, zweite und dritte Filterabteilungen (76, 78, 80) umfasst, wobei der Rotorschaft (72) der zweiten Filtereinheit (78) mit der ersten Filtereinheit (76) verbunden ist, um gefiltertes Wasser von der ersten Filtereinheit (76) zu empfangen, und/oder
wobei der Rotorschaft (72) ausgebildet ist, um dem empfangenen Wasser zu ermöglichen, in die Wasserverteilungsscheibe (74) abgegeben zu werden.

10. Abwasserbehandlungssystem nach einem der vorhergehenden Ansprüche, wobei die Wasserverteilungsscheibe (74) ausgebildet ist, um das Wasser an die erste Filterabteilung (76), die dreieckförmige einen Vortex generierende Elemente (90), zumindest eine erste Filterfolie (92), Durchlässe (94) und/oder einen Auslass für feste Bestandteile (96) aufweist.

11. Abwasserbehandlungssystem nach einem der vorhergehenden Ansprüche, wobei die erste Filterabteilung (76) ausgebildet ist, um Wasser, welches in die erste Filterabteilung (76) gelangt, zu ermöglichen, zunächst zumindest ein erstes einen Vortex generierendes Elemente (90) zu passieren und anschließend zumindest eine erste Filterfolie (92) zu passieren, und wobei die festen Bestandteile, die nicht durch die erste Filterfolie hindurch gelangen, durch den Auslass für feste Bestandteile (96) aussortiert werden.

12. Abwasserbehandlungssystem nach einem der vorhergehenden Ansprüche, wobei die zweite Filtereinheit (70) ausgebildet ist, um das Wasser im Anschluss an das Passieren der ersten Filterabteilung (76) an die zweite Filterabteilung (78) weiterzuleiten, die zumindest eine zweite Filterfolie und einen Auslass für feste Bestandteile (98) umfasst.

13. Abwasserbehandlungssystem nach einem der vorhergehenden Ansprüche, wobei die zweite Filtereinheit (70) ausgebildet ist, um das Wasser im Anschluss an das Passieren der zweiten Filterfolie der zweiten Filterabteilung (78) an eine dritte Filterabteilung (80) weiterzuleiten, die einen zylindrischen Filter (100), einen Auslass für gefiltertes Wasser (82) und einen Auslass für feste Bestandteile (102) umfasst, wobei die dritte Filterabteilung (80) Wasser filtert und an den Auslass für gefiltertes Wasser (82) weiterleitet, während feste Bestandteile durch den Auslass für feste Bestandteile (102) aussortiert werden.

14. Abwasserbehandlungssystem nach einem der vorhergehenden Ansprüche, wobei die zweite Filtereinheit (70) ausgebildet ist, um die ausgesonderten festen Bestandteile von der ersten, zweiten und dritten Abteilung (76, 78, 80) in dem Ansammelring für feste Bestandteile (84) zu sammeln und diese festen Bestandteile von dem Ansammelring für feste Bestandteile (84) an den ersten Anschluss (12) des Ablagerungstanks (10) weiterzuleiten.

## Revendications

1. Système de traitement des eaux usées comprenant :
une cuve de décantation (10) ayant des premier, deuxième et troisième orifices (12, 14, 16), laquelle cuve de décantation (10) est configurée pour recevoir les eaux usées brutes au niveau de son premier orifice (12), fournir de l'eau pré-nettoyée au niveau de son second orifice (14) et fournir une sortie pour les solides retirés desdites eaux usées au niveau de son troisième orifice (16) ;
une première unique de filtre (50) raccordée au deuxième orifice (14) de la cuve de décantation (10) pour recevoir et filtrer ladite eau pré-nettoyée, ladite première unité de filtre (50) étant en outre raccordée au premier orifice (12) de la cuve de décantation pour ramener les solides et les matières flottantes retirés de ladite eau pré-nettoyée dans la première unité de filtre (50), dans la cuve de décantation (10) ; et
**caractérisé par** :
une seconde unité de filtre (70) raccordée à la première unité de filtre (50) pour recevoir et filtrer en outre l'eau filtrée provenant de la première unité de filtre (50), ladite seconde unité de filtre (70) étant en outre raccordée au premier orifice (12) de la cuve de décantation (10) pour ramener les solides et les matières flottante retirés de l'eau dans la seconde unité de filtre (70), dans la cuve de décantation (10), dans lequel :
la première unité de filtre (50) comprend une tige de rotor (52), les aubes de rotor (54), des anneaux filtrants (56), des trous de fond de rotor (58) et des écrans de boue aqueuse (60),
dans lequel la première unité de filtre (50) comprend trois sections successives à chacune desquelles une aube de rotor (54) et un anneau filtrant (56) sont attribués,
dans lequel la tige de rotor (52) de ladite première unité de filtre est raccordée au second orifice (14) de la cuve de décantation pour recevoir l'eau du second orifice (14),
dans lequel ladite tige de rotor (52) comprend des trous de fond (58) pour libérer l'eau de la tige de rotor (52) dans la section inférieure par lesdits trous de fond, et
dans lequel les écrans de boue aqueuse (60) sont agencés pour empêcher l'eau de monter dans la première unité de filtre (50) autrement que par les anneaux filtrants (56).

2. Système de traitement des eaux usées selon la revendication 1, dans lequel :
la cuve de décantation (10) a une forme d'étoile avec les premier, deuxième et troisième orifices (12, 14, 16) qui forment ses trois extrémités et le troisième orifice (16) qui est agencé au fond de la cuve de décantation (10).

3. Système de traitement des eaux usées selon l'une quelconque des revendications précédentes, dans lequel à proximité du troisième orifice (16) de la cuve de décantation (10), on trouve une vis (44) pour retirer des solides et un canal (42) pour piéger des solides et les guider vers la vis (44).

4. Système de traitement des eaux usées selon l'une quelconque des revendications précédentes, dans lequel à proximité du premier orifice (12) de la cuve de décantation, la cuve de décantation (10) est prévue avec un séparateur (32) définissant un premier réservoir (30) à l'intérieur de la cuve de décantation dans lequel les matières plus légères que l'eau se rassemblent.

5. Système de traitement des eaux usées selon l'une quelconque des revendications précédentes, dans lequel à proximité du deuxième orifice (14), la cuve de décantation (10) comprend un dispositif de blocage de sédimentation (36), un piège de matières flottantes (38), une ouverture de fuite (40) et/ou un second réservoir (28).

6. Système de traitement des eaux usées selon la revendication 1, dans lequel ladite première unité de filtre (50) comprend en outre des vis de retrait de solides (66), des rainures d'accumulation de solides (64) et un anneau de sortie d'eau filtrée (62).

7. Système de traitement des eaux usées selon la revendication 6, dans lequel lesdites rainures d'accumulation de solides (64) sont configurées pour collecter des solides de l'eau, et dans lequel lesdites rainures d'accumulation de solides (64) sont nettoyées à l'aide de vis de retrait de solides (66) agencées de manière appropriée, et/ou
dans lequel l'anneau de sortie d'eau filtrée (62) est configuré pour permettre à l'eau filtrée de sortir de la première unité de filtre (50).

8. Système de traitement des eaux usées selon l'une quelconque des revendications précédentes, dans lequel la deuxième unité de filtre (70) comprend une tige de rotor (72), un disque de distribution d'eau (74), des compartiments de filtration (76, 78, 80), des sorties d'eau filtrée (82), un anneau d'accumulation de solides (84) et/ou une sortie de rejet de solides (86).

9. Système de traitement des eaux usées selon l'une quelconque des revendications précédentes, dans lequel la deuxième unité de filtre (70) comprend des premier, deuxième et troisième compartiments de filtration (76, 78, 80),
dans lequel la tige de rotor (72) de la deuxième unité de filtre (78) est raccordée à la première unité de filtre (76) pour recevoir l'eau filtrée de la première unité de filtre (76), et/ou
dans lequel ladite tige de rotor (72) est configurée pour permettre à ladite eau reçue, d'être libérée dans le disque de distribution d'eau (74).

10. Système de traitement des eaux usées selon l'une quelconque des revendications précédentes, dans lequel le disque de distribution d'eau (74) est configuré pour guider ladite eau jusqu'à un premier compartiment de filtration (76) comprenant des éléments de génération de tourbillon triangulaires (90), au moins une première feuille de filtration (92), des passages (94) et/ou une sortie pour les solides (96).

11. Système de traitement des eaux usées selon l'une quelconque des revendications précédentes, dans lequel ledit compartiment de filtration (76) est configuré pour permettre à l'eau d'entrer dans le premier compartiment de filtration (76) pour passer dans un premier temps dans au moins un premier desdits éléments de génération de tourbillon (90) et passer ensuite par ladite au moins une première feuille de filtration (92) et dans lequel les solides ne passant pas par ladite première feuille de filtration sont rejetés par la sortie pour solides (96).

12. Système de traitement des eaux usées selon l'une quelconque des revendications précédentes, dans lequel ladite deuxième unité de filtration (70) est configurée pour guider ladite eau, pour passer ensuite par le premier compartiment de filtration (76) jusqu'à un deuxième compartiment de filtration (78) comprenant au moins une deuxième feuille de filtration et une sortie pour solides (98).

13. Système de traitement des eaux usées selon l'une quelconque des revendications précédentes, dans lequel ladite deuxième unité de filtration (70) est configurée pour guider ladite eau, ensuite pour passer par la deuxième feuille filtrante du deuxième compartiment de filtration (78), jusqu'à un troisième compartiment de filtration (80) comprenant un filtre cylindrique (100), une sortie d'eau filtrée (82) et une sortie pour solides (102), lequel troisième compartiment de filtration (80) filtre l'eau et la fait passer par la sortie d'eau filtrée (82) alors que les solides sont rejetés par la sortie pour solides (102).

14. Système de traitement des eaux usées selon l'une quelconque des revendications précédentes, dans lequel ladite deuxième unité de filtre (70) est configurée pour collecter les solides rejetés par les premier, deuxième et troisième compartiments (76, 78, 80) dans ledit anneau d'accumulation de solides (84) et transférer ces solides dudit anneau d'accumulation de solides (84) au premier orifice (12) de la cuve de décantation (10).
